# EUROPEAN PATENT APPLICATION

(11) **EP 2 873 829 A1**
(43) Date of publication of application: **20.05.2015**
(21) Application number: 12881100.7
(22) Date of filing: 12.07.2012
(51) Int. Cl.: F02B 37/18, F02B 37/12

(54) **CONTROL DEVICE OF INTERNAL COMBUSTION ENGINE EQUIPPED WITH TURBO SUPERCHARGER**

(71) Applicant: TOYOTA JIDOSHA KABUSHIKI KAISHA, Toyota-shi, Aichi-ken, 471-8571 (JP)
(72) Inventor: SAKAYANAGI, Yoshihiro, Toyota-shi, Aichi-ken, 471-8571 (JP); EIRAKU, Akira, Toyota-shi, Aichi-ken, 471-8571 (JP); TANAKA, Satoru, Toyota-shi, Aichi-ken, 471-8571 (JP); SAITO, Yusuke, Toyota-shi, Aichi-ken, 471-8571 (JP); SOEJIMA, Shinichi, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2012/067856
(87) International publication number: WO 2014/010067

(57) **Abstract**

An object of the present invention is to improve controllability over a supercharging pressure in a transient state, in a control device of an internal combustion engine equipped with a turbo supercharger that determines a manipulated variable of an actuator which acts on a rotational speed of a turbine by feedback control based on a deviation between a target state quantity and an actual state quantity. To this end, a control device according to the present invention determines an opening degree of a throttle by feedforward control based on a target intake air amount, and determines a manipulated variable of the actuator by feedback control based on a deviation between a target intake pressure determined from the target intake air amount and an actual intake pressure.

## Description

### Technical Field

The present invention relates to a control device of an internal combustion engine equipped with a turbo supercharger, and particularly relates to a control device that determines a manipulated variable of an actuator that acts on a rotational speed of a turbine, that is, an actuator that acts on a supercharging pressure by feedback control based on a deviation between a target state quantity and an actual state quantity.

### Background Art

There is known a technique of controlling the supercharging pressure of an internal combustion engine equipped with a turbo supercharger by an operation of an actuator. For example, in the technique described in Patent Literature 1 described below, a variable nozzle opening degree which can achieve a target supercharging pressure is obtained by determining the opening degree of the variable nozzle by feedback control based on the deviation between the target supercharging pressure and the actual supercharging pressure, in the internal combustion engine equipped with a variable displacement turbo supercharger. Further, there is also known a technique of determining the opening degree of a wastegate valve by feedback control based on the deviation between the target supercharging pressure and the actual supercharging pressure, in the internal combustion engine equipped with a turbo supercharger having a wastegate valve. As in these techniques, the supercharging pressure of an internal combustion engine can be kept at an optimal value corresponding to the operating state by determining the actuator manipulated variable by super charging pressure feedback control.

In the supercharging pressure feedback control, actuators that act on the supercharging pressure like a variable nozzle and a wastegate valve are operated. Compression work performed by a compressor on air changes by changing the rotational speed of a turbine by these actuators, and the supercharging pressure eventually changes. However, the supercharging pressure is influenced by not only these actuators, but also a throttle. For example, when the throttle is closed at a high speed, an air flow path is choked, whereby the supercharging pressure which is a pressure upstream of the throttle increases. In this case, in order to reduce the actual supercharging pressure which is higher than the target supercharging pressure, the actuator is operated so as to reduce the turbine rotational speed by supercharging pressure feedback control. The turbine rotational speed is thereby reduced, and the supercharging pressure is reduced.

However, when the actuator is operated so as to increase the turbine rotational speed again, time is required before the turbine rotational speed which is reduced once is increased again. Therefore, even if the throttle is opened again in response to a request for reacceleration, the intake air amount which is required for the reacceleration cannot be obtained because the supercharging pressure which is reduced once is not immediately increased. Namely, desired acceleration performance cannot be obtained.

In this regard, in the technique described in Patent Literature 1, the supercharging pressure feedback control is stopped to enhance the supercharging pressure at the time of reacceleration, when the operating state of the internal combustion engine is brought into a deceleration state. A similar technique is also described in Patent Literature 2 described below. According to the technique described in Patent Literature 2, a wastegate valve is forcedly closed irrespective of whether or not the engine is in a low load state when the possibility that the vehicle is accelerated is in a high state, although the wastegate valve is fully opened in an ordinary low load state.

According to the technique described in Patent Literature 1, by preventing the reduction in the supercharging pressure at the time of acceleration, acceleration response can be improved. However, when the supercharging pressure feedback control which is stopped once is restarted, the supercharging pressure is possibly abruptly changed by the action of the supercharging pressure feedback control depending on the difference between the target supercharging pressure and the actual supercharging pressure at the time of restart and the actuator manipulated variable at the time of restart. That is to say, the conventional supercharging pressure feedback control still has a room for improvement in regard to controllability over the supercharging pressure.

### Citation List

### Patent Literature

Patent Literature 1:
   Japanese Patent Laid-Open No. 2004-092477
Patent Literature 2
   Japanese Patent Laid-Open No. 2008-014289

### Summary of Invention

### Solution to Problem

The present invention has been made in the light of the aforementioned problems, and an object of the present invention is to improve controllability over a supercharging pressure in a transient state, in a control device of an internal combustion engine equipped with a turbo supercharger that determines an manipulated variable of an actuator that acts on the supercharging pressure by feedback control based on a deviation between a target state quantity and an actual state quantity.

In order to attain the above-described object, a control device according to the present invention determines an opening degree of a throttle by feedforward control based on a target intake air amount, and determines a manipulated variable of an actuator which acts on a supercharging pressure by feedback control based on a deviation between a target intake pressure determined from the target intake air amount and an actual intake pressure, that is, intake pressure feedback control. The actual intake pressure for use in the intake pressure feedback control may be a measured value measured by using an intake pressure sensor, or may be an estimated value estimated by using a physical model.

Since responsiveness of the intake pressure to a change of the opening degree of the throttle is high, the actual intake pressure changes to follow the target intake pressure. Therefore, even in a transient state in which the opening degree of the throttle abruptly changes, a deviation between the target intake pressure and the actual intake pressure is small. Accordingly, by determining the actuator manipulated variable by the intake pressure feedback control, the actuator manipulated variable is prevented from being varied by the influence of abrupt change of the opening degree of the throttle, and occurrence of insufficiency and excessiveness of the supercharging pressure can be restrained.

In a preferable embodiment of the control device according to the present invention, in a steady state which is not a transient state, the control device according to the present invention determines the manipulated variable of the actuator by feedback control based on the deviation between the target supercharging pressure determined from the target intake pressure and the actual supercharging pressure, that is, supercharging pressure feedback control. The actual supercharging pressure for use in the supercharging pressure feedback control may be a measured value measured by using a supercharging pressure sensor, or may be an estimated value estimated by using a physical model. In the transient state in which the supercharging pressure significantly changes, the control device selects the intake pressure feedback control in place of the supercharging pressure feedback control, and determines the manipulated variable of the actuator by the intake pressure feedback control. According thereto, controllability over the supercharging pressure in the transient state can be improved while the controllability over the supercharging pressure in an ordinary state is kept high.

### Brief Description of Drawings

[Figure 1] Figure 1 is a functional block diagram showing a configuration of a control device according to Embodiment 1 of the present invention.
[Figure 2] Figure 2 is a time chart showing an image of a control result of intake pressure feedback control by the control device shown in Figure 2.
[Figure 3] Figure 3 is a time chart showing an image of a control result of conventional supercharging pressure feedback control.
[Figure 4] Figure 4 is a functional block diagram showing a configuration of a control device according to Embodiment 2 of the present invention.
[Figure 5] Figure 5 is a flowchart showing determination of selection of a feedback control method by the control device shown in Figure 4.
[Figure 6] Figure 6 is a functional block diagram showing a configuration of a control device according to Embodiment 3 of the present invention.
[Figure 7] Figure 7 is a functional block diagram showing a configuration of a control device according to Embodiment 4 of the present invention.

### Description of Embodiments

### Embodiment 1

Embodiment 1 of the present invention will be described hereinafter with reference to the drawings.

A control device according to the present embodiment is applied to a spark ignition type four-cycle reciprocating engine equipped with a turbo supercharger. In an intake passage of the internal combustion engine, an electronically controlled throttle is mounted, and a wastegate valve is mounted to an exhaust passage. Further, downstream of the throttle in the intake passage, an intake pressure sensor for measuring an intake pressure is mounted.

An operation of an internal combustion engine is controlled by an on-board ECU (Electronic Control Unit). The ECU includes various functions of vehicle control, engine control, a transmission control and the like. The control device according to the present embodiment is realized by some of the functions that the ECU includes. Various kinds of information relating to an operation state and operating conditions of the internal combustion engine are inputted to the ECU from various sensors including the intake pressure sensor. When the ECU functions as the control device according to the present embodiment, the ECU operates the throttle in accordance with a control program stored in a memory, and operates a wastegate valve. By operating the wastegate valve, the ECU controls a rotational speed of a turbine of the supercharger, and can thereby control a supercharging pressure. By operating the throttle, the ECU controls the intake pressure, and can thereby control an air amount which is taken into cylinders.

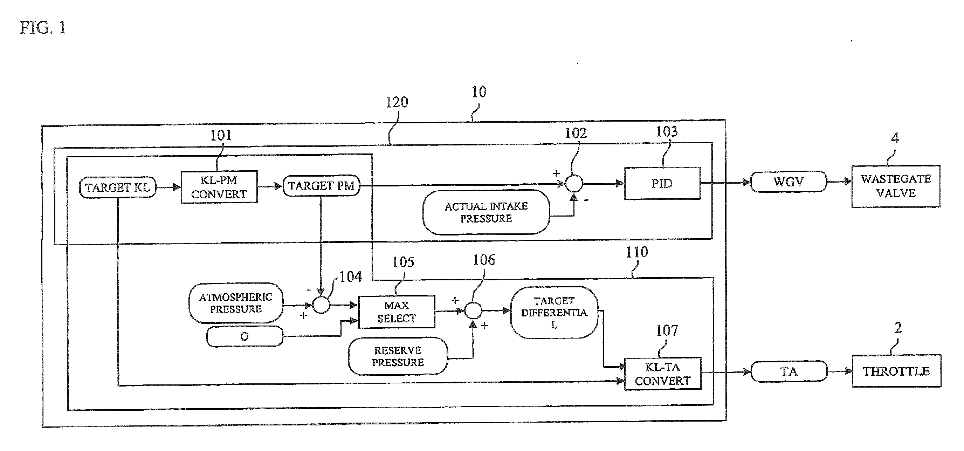

Figure 1 is a functional block diagram showing a configuration of the control device which is realized by an ECU 10 functioning in accordance with a control program. The control device according to the present embodiment includes a throttle control unit 110 for determining a manipulated variable of a throttle 2, and a wastegate valve control unit 120 for determining a manipulated variable of a wastegate valve 4. The two control units 110 and 120 are each configured by a plurality of arithmetic elements. Some of the arithmetic elements are shared between the two control units 110 and 120.

The throttle control unit 110 is configured by arithmetic elements 101, 104, 105, 106 and 107. The arithmetic element 101 converts a target intake air amount into a target intake pressure. In conversion of the target intake air amount into the target intake pressure, a map or a function expression is used. Note that an intake air amount is denoted as KL, and the intake pressure is denoted as PM in the drawing.

The target intake air amount is determined based on a request torque to the internal combustion engine. The request torque includes a driver request torque which is determined in response to an accelerator pedal opening degree, and a system request torque which is requested from a plurality of on-board systems. The system request torque includes various torques such as a torque for traction control, a torque for sideslip prevention control, and a torque for transmission control of an electronically controlled automatic transmission. As the system request torque, a torque that changes in a pulse form is requested in some cases. For example, at a time of shifting up an electronically controlled automatic transmission, a torque that changes in a pulse form in a torque down direction is requested. When a waveform of the request torque includes a pulse component, the waveform is reflected in a waveform of the target intake air amount which is determined based on the request torque.

The arithmetic element 104 calculates a differential pressure between an atmospheric pressure and the target intake pressure. As the atmospheric pressure for use in calculation, an actual atmospheric pressure that is measured by using an atmospheric pressure sensor is preferable. However, when an atmospheric pressure sensor is not included, a standard atmospheric pressure is stored in a memory as a preset value, and the standard atmospheric pressure may be used in calculation. The differential pressure between the atmospheric pressure and the target intake pressure, which is calculated in the arithmetic element 104, is inputted to the arithmetic element 105. The arithmetic element 105 directly outputs a value of the differential pressure if the value of the inputted differential pressure is equal to or larger than zero, whereas if the value of the differential pressure is smaller than zero, the arithmetic element 105 outputs zero in place of the value of the differential pressure. The output value from the arithmetic element 105 is inputted to the arithmetic element 106. The arithmetic element 105 adds a reserve pressure to the output value of the arithmetic element 106, and outputs a total value thereof as a target differential pressure. The target differential pressure is a target value of a differential pressure between the supercharging pressure and the intake pressure, and the reserve pressure is a lowest limit margin of the supercharging pressure with respect to the intake pressure. Note that the reserve pressure may be a fixed value, but can be actively changed in conjunction with the target intake pressure as will be described later.

The target differential pressure which is calculated in the arithmetic element 106 is inputted to the arithmetic element 107 together with the target intake air amount. The arithmetic element 107 calculates a throttle opening degree for realizing the target intake air amount with the target differential pressure as a precondition. In calculation of the throttle opening degree, an inverse model of an air model is used. An air model is a physical model which is obtained by modeling dynamic characteristics of a pressure and a flow rate in the intake passage with respect to an operation of the throttle. The throttle control unit 110 operates the throttle 2 with the throttle opening degree which is calculated in the arithmetic element 107 as a manipulated variable. Note that in the drawings, the throttle opening degree is denoted as TA.

The wastegate valve control unit 120 is configured by the arithmetic elements 101, 102 and 103. The arithmetic element 101 is shared with the throttle control unit 110. In the wastegate valve control unit 120, the target intake pressure which is calculated in the arithmetic element 101 is inputted to the arithmetic element 102. The arithmetic element 102 calculates a deviation between the target intake pressure and the actual intake pressure. The actual intake pressure is a measured value of the intake pressure which is measured by using an intake pressure sensor.

The intake pressure deviation which is calculated in the arithmetic element 102 is inputted to the arithmetic element 103. The arithmetic element 103 is a PID controller, and calculates a wastegate valve opening degree by PID control based on the inputted intake pressure deviation. The wastegate valve control unit 120 operates the wastegate valve 4 with the wastegate valve opening degree calculated in the arithmetic element 103 as a manipulated variable. Note that in the drawings, the wastegate valve opening degree is denoted as WGV.

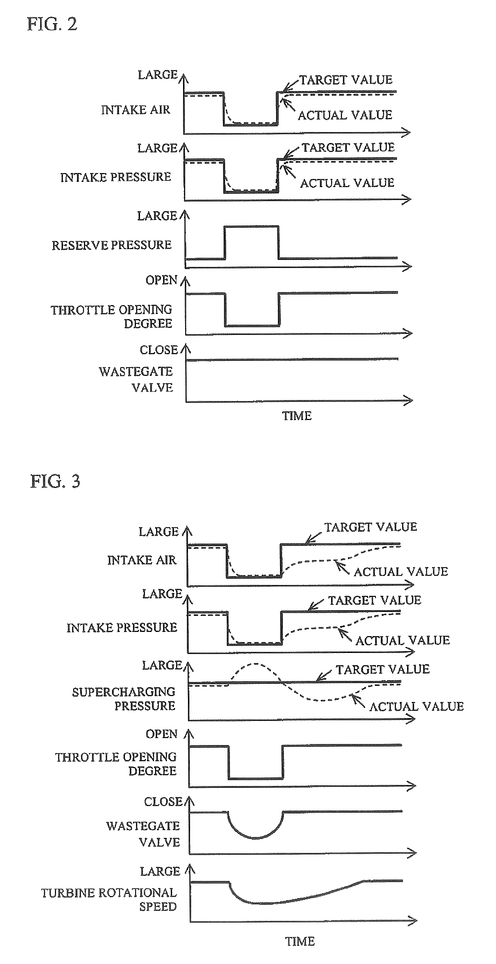

Next, an effect in control which is obtained by the control device according to the present embodiment will be described with use of Figure 2 and Figure 3.

Figure 2 shows a control result by the control device according to the present embodiment in a case in which abrupt acceleration is requested immediately after abrupt deceleration. When abrupt deceleration and abrupt acceleration are requested in succession, the target intake air amount is decreased stepwise, and immediately thereafter, the target intake air amount is increased stepwise. The target intake pressure which is obtained by converting the target intake air amount has a waveform similar to that of the target intake air amount.

In the control device according to the present embodiment, the target differential pressure is determined by adding the reserve pressure to the differential pressure between the atmospheric pressure and the target intake pressure. In the example shown in Figure 2, the reserve pressure is increased in accordance with decrease in the target intake pressure, and is decreased in accordance with increase in the target intake pressure. During a time period in which the target intake pressure temporarily decreases, the target differential pressure is thereby significantly increased. With the target differential pressure as the precondition, the throttle opening degree for realizing the target intake air amount is calculated. The throttle is thereby closed at a high speed by a large amount, and immediately thereafter, the throttle is opened at a high speed by a large amount.

The throttle opening degree is changed at a high speed, whereby the intake pressure also changes at a high speed. The actual intake pressure thereby follows the change in the target intake pressure, and a large deviation does not occur between the target intake pressure and the actual intake pressure. In particular, the actual intake pressure does not become excessively high with respect to the target intake pressure. Therefore, the wastegate valve opening degree which is determined by the intake pressure feedback control does not change to an opening side, and the wastegate valve opening degree is kept at a present state. It is thereby possible to obtain desired acceleration performance by keeping the supercharging pressure at a time of acceleration after deceleration at a high value, and increasing the actual intake air amount to be as large as the target intake air amount.

Meanwhile, a control result shown in Figure 3 is obtained by the conventional supercharging pressure feedback control, and is a comparative example with respect to the control result by the control device according to the present embodiment. As a result that the throttle is closed abruptly due to stepwise decrease of the target intake air amount and the target intake pressure, the flow path for air is choked, whereby the supercharging pressure which is the pressure upstream of the throttle increases. In this case, according to the conventional supercharging pressure feedback control, the wastegate valve is operated to the opening side so as to reduce the actual supercharging pressure which becomes excessively high with respect to the target supercharging pressure. As a result that the wastegate valve is opened, the turbine rotational speed is reduced, and with this, the supercharging pressure is reduced. However, as the result that the turbine rotational speed is reduced, the supercharging pressure cannot be quickly increased at the time of acceleration after the deceleration, and the actual intake air amount cannot be increased to be as large as the target intake air amount. That is, desired acceleration performance cannot be obtained.

As is understandable from comparison with the conventional supercharging pressure feedback control, the control device according to the present embodiment adopts the method for determining the wastegate valve opening degree by the intake pressure feedback control, whereby the operation of the throttle can be restrained from having an influence on the determination of the wastegate valve opening degree. Controllability over the supercharging pressure in a transient state in which the throttle opening degree abruptly changes can be thereby improved.

### Embodiment 2

Next, Embodiment 2 of the present invention will be described with use of the drawings.

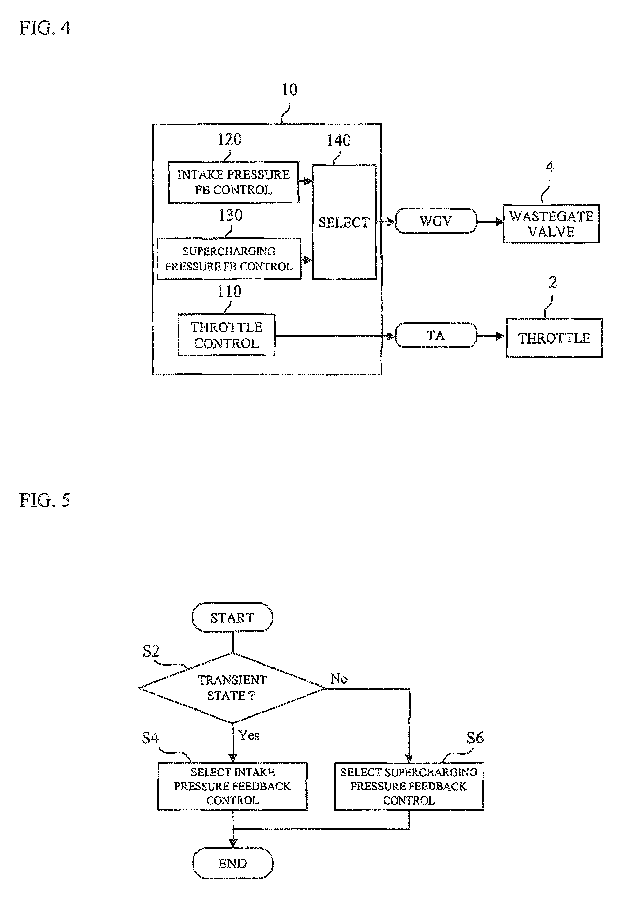

Figure 4 is a block diagram showing a configuration of a control device according to Embodiment 2 of the present invention. In Figure 4, the elements common to the control device according to Embodiment 1 are assigned with the same reference signs. The control device according to the present embodiment is realized as some of the functions of the ECU 10 similarly to the control device according to Embodiment 1, and includes the throttle control unit 110 and the wastegate valve control unit 120 similarly to the control device according to Embodiment 1.

A feature of the control device according to the present embodiment is further including a second wastegate valve control unit 130 and a selection unit 140. While the wastegate valve control unit 120 is programmed to determine the wastegate valve opening degree by the intake pressure feedback control, the second wastegate valve control unit 130 is programmed to determine the wastegate valve opening degree by the supercharging pressure feedback control. A method for the supercharging pressure feedback control does not differ from the method which is conventionally performed. What is obtained by adding the reserve pressure to the target intake pressure is set as a target supercharging pressure, and the wastegate valve opening degree is determined by feedback control based on the deviation between the target supercharging pressure and the actual supercharging pressure.

Either one of the two wastegate valve control units 120 and 130 is selected by the selection unit 140, and an operation of the wastegate valve 4 is performed in accordance with the wastegate valve opening degree determined by the selected unit. Determination of selection by the selection unit 140 is performed in accordance with a flowchart shown in Figure 5. In step S2, the selection unit 140 determines whether or not a present state of the internal combustion engine is a transient state. The transient state mentioned here means a state in which the supercharging pressure changes significantly by an influence of abrupt movement of the throttle 2, or a state in which the supercharging pressure is likely to vary significantly. Whether it is in a transient state or not may be determined based on a change of the target intake air amount, or may be determined based on the change of the request torque. Whether it is in a transient state or not can be also determined from the change in the throttle opening degree which is calculated in the throttle control unit 110. When the internal combustion engine includes a supercharging pressure sensor, whether it is in a transient state or not can be also determined from a change of the supercharging pressure which is measured by the supercharging pressure sensor.

When the determination result in step S2 is Yes, step S4 is selected. In step S4, the wastegate valve control unit 120 is selected by the selection unit 140, and the wastegate valve opening degree is determined by the intake pressure feedback control similarly to Embodiment 1. Meanwhile, when the determination result of step S2 is No, step S6 is selected. In step S6, the second wastegate valve control unit 130 is selected by the selection unit 140, and the wastegate valve opening degree is determined by the supercharging pressure feedback control similarly to the conventional control device. Note that at a time of switching the selection of the feedback control method, processing for preventing abrupt change of the wastegate valve opening degree accompanying switching such as leveling processing and gradual change processing of a feedback correction amount is performed.

According to the control device according to the present embodiment, in an ordinary state which is not a transient state, the wastegate valve opening degree is determined by the conventional supercharging pressure feedback control, whereby the supercharging pressure of the internal combustion engine can be kept at an optimal value corresponding to the operation state. In the transient state in which the throttle opening degree abruptly changes, the wastegate valve opening degree is determined by the intake pressure feedback control, whereby worsening of the controllability over the supercharging pressure by the operation of the throttle influencing the feedback control can be prevented.

### Embodiment 3

Next, Embodiment 3 of the present invention will be described with use of the drawing.

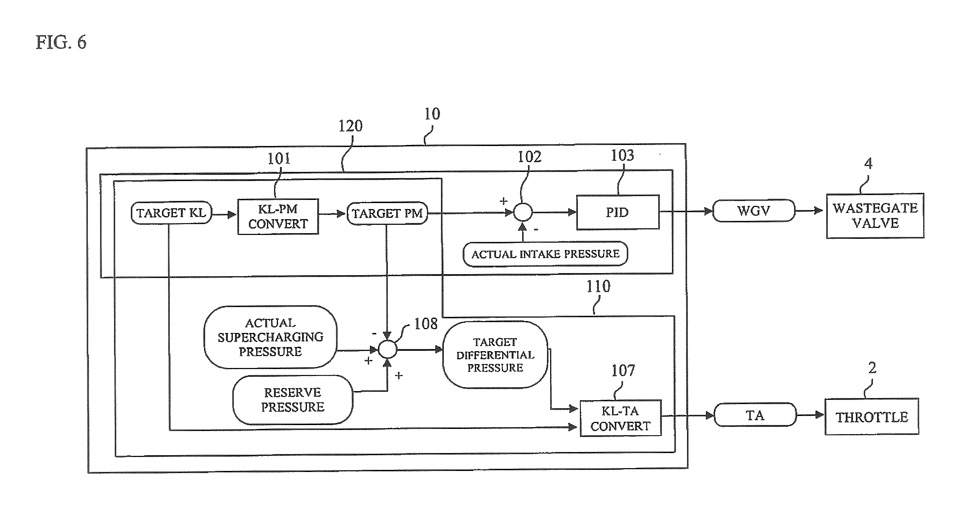

A control device according to Embodiment 3 of the present invention has an internal combustion engine equipped with a turbo supercharger which also has a supercharging pressure sensor in addition to an intake pressure sensor as a control target. Figure 6 is a block diagram showing a configuration of the control device according to Embodiment 3 of the present invention. In Figure 6, the elements common to the control device according to Embodiment 1 are assigned with the same reference signs. The control device according to the present embodiment includes the throttle control unit 110 and the wastegate valve control unit 120 similarly to the control device according to Embodiment 1.

The control device according to the present embodiment has a feature in a configuration of the throttle control unit 110. In the present embodiment, the throttle control unit 110 is configured by arithmetic elements 101, 107 and 108. The arithmetic element 108 replaces the arithmetic elements 104, 105 and 106 of Embodiment 1, and a target intake pressure, an actual supercharging pressure and a reserve pressure are inputted to the arithmetic element 108. The actual supercharging pressure is a measured value of the supercharging pressure which is measured by using the supercharging pressure sensor. The arithmetic element 108 adds the reserve pressure to a differential pressure between the actual supercharging pressure and the target intake pressure, and outputs a total value of them as a target differential pressure. According to the throttle control unit 110 which is configured as above, control performance equivalent to that of Embodiment 1 can be obtained.

### Embodiment 4

Next, Embodiment 4 of the present invention will be described with use of the drawing.

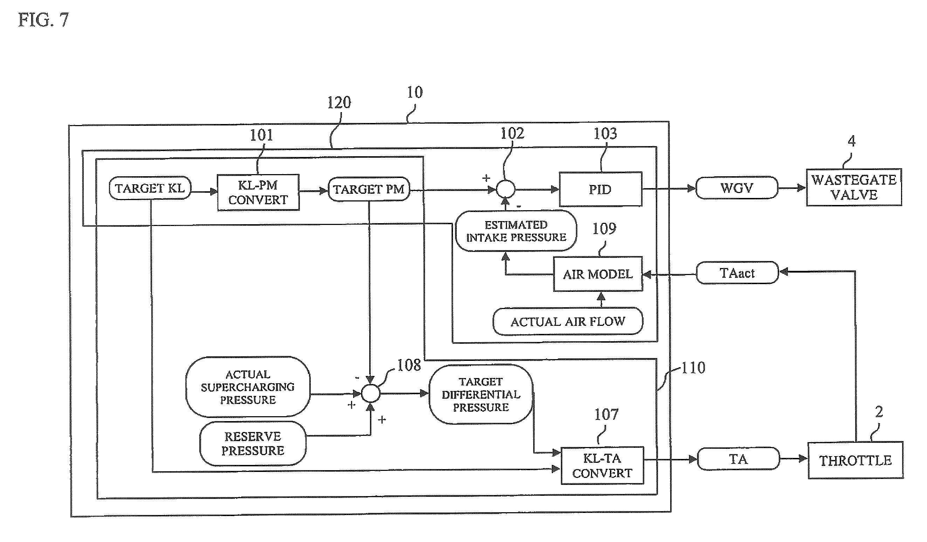

A control device according to Embodiment 4 of the present invention has an internal combustion engine equipped with a turbo supercharger which has only a supercharging pressure sensor without having an intake pressure sensor, as a control target. Figure 7 is a block diagram showing a configuration of the control device according to Embodiment 4 of the present invention. In Figure 7, the elements common to the control device according to Embodiment 3 are assigned with the same reference signs. The control device according to the present embodiment includes the throttle control unit 110 and the wastegate valve control unit 120 similarly to the control device according to Embodiment 3.

The control device according to the present embodiment has a feature in a configuration of the wastegate valve control unit 120. The configuration of the throttle control unit 110 is similar to the configuration of Embodiment 3. In the present embodiment, the wastegate valve control unit 120 is configured by arithmetic elements 101, 102, 103 and 109. The arithmetic element 109 calculates an estimated intake pressure which is an estimated value of an actual intake pressure from an actual throttle opening degree and an actual air flow rate. In calculation of the estimated intake pressure, the aforementioned air model is used. The actual air flow rate is a measured value of the air flow rate which is measured by using an air flow meter. The actual throttle opening degree is a measured value of the throttle opening degree which is measured by using a throttle opening degree sensor. Note that in the drawing, the actual throttle opening degree is denoted as TAact. The estimated intake pressure calculated in the arithmetic element 109 is inputted to the arithmetic element 102, and a differential pressure between the target intake pressure and the estimated intake pressure is calculated in the arithmetic element 102. According to the wastegate valve control unit 120 which is configured as above, control performance equivalent to that of Embodiment 1 and Embodiment 2 can be obtained.

### Others

The present invention is not limited to the aforementioned embodiments, and can be carried out by being variously modified within the range without departing from the gist of the present invention. For example, while in the aforementioned embodiments, the present invention is applied to the internal combustion engine equipped with a turbo supercharger including the wastegate valve, the present invention can be also applied to an internal combustion engine equipped with a turbo supercharger including a variable nozzle.

### Reference Signs List

- 2: Throttle
- 4: Wastegate valve
- 10: Control device
- 110: Throttle control unit
- 120: Wastegate valve control unit
- 130: Second wastegate valve control unit
- 140: Selection unit

## Claims

1. A control device of an internal combustion engine with a turbo supercharger including a throttle and an actuator that acts on a supercharging pressure, comprising:
first control means for determining an opening degree of the throttle by feedforward control based on a target intake air amount; and
second control means for determining a manipulated variable of the actuator by feedback control based on a deviation between a target intake pressure determined from the target intake air amount and an actual intake pressure.

2. The control device of an internal combustion engine equipped with a turbo supercharger according to claim 1, comprising:
third control means for determining the manipulated variable of the actuator by feedback control based on a deviation between a target supercharging pressure determined from the target intake pressure and an actual supercharging pressure; and
selection means for selecting the third control means in a steady state which is not a transient state, and selecting the second control means in the transient state, as means for determining the manipulated variable of the actuator.
